# EUROPÄISCHE PATENTSCHRIFT

(11) **EP 1 060 475 B1**
(45) Veröffentlichungstag und Bekanntmachung des Hinweises auf die Patenterteilung: **07.05.2003**
(21) Anmeldenummer: 99911601.5
(22) Anmeldetag: 18.02.1999
(51) Int. Cl.: G21C 15/18, G21C 9/004

(54) **SICHERHEITSBEHÄLTER UND VERFAHREN ZUM BETRIEB EINES KONDENSATORS IN EINER KERNKRAFTANLAGE**
CONTAINMENT VESSEL AND METHOD FOR OPERATING A CONDENSER IN A NUCLEAR POWER PLANT
ENCEINTE DE CONFINEMENT ET PROCEDE POUR ACTIONNER UN CONDENSEUR DANS UNE CENTRALE NUCLEAIRE

(30) Priorität: 03.03.1998 DE 19809000
(43) Veröffentlichungstag der Anmeldung: 20.12.2000
(73) Patentinhaber: Framatome ANP GmbH, 91050 Erlangen (DE)
(72) Erfinder: MESETH, Johann, D-64807 Dieburg (DE)
(74) Vertreter: Tergau & Pohl Patentanwälte
(86) Internationale Anmeldenummer: DE9900447
(87) Internationale Veröffentlichungsnummer: WO99045546

(56) Entgegenhaltungen:
- EP-A- 0 677 851
- US-A- 5 149 492
- US-A- 5 303 274
- PATENT ABSTRACTS OF JAPAN vol. 096, no. 012, 26. Dezember 1996 & JP 08 211181 A (TOSHIBA CORP), 20. August 1996
- PATENT ABSTRACTS OF JAPAN vol. 095, no. 008, 29. September 1995 & JP 07 128482 A (TOSHIBA CORP), 19. Mai 1995
- PATENT ABSTRACTS OF JAPAN vol. 018, no. 596 (P-1825), 14. November 1994 & JP 06 222182 A (TOSHIBA CORP), 12. August 1994
- PATENT ABSTRACTS OF JAPAN vol. 017, no. 320 (P-1558), 17. Juni 1993 & JP 05 034484 A (TOSHIBA CORP), 9. Februar 1993

## Beschreibung

Die vorliegende Erfindung betrifft einen Sicherheitsbehälter einer Kernkraftanlage mit einer Kondensationskammer, mit einer Druckkammer und mit einem im oberen Bereich der Druckkammer angeordneten Kondensator sowie ein Verfahren zum Betrieb eines Kondensators in einer Kernkraftanlage.

Moderne Sicherheitskonzepte von Kernkraftanlagen sind dahingehend konzipiert, daß bei Störfällen die Auswirkungen auf die Kernkraftanlage begrenzt sind, und die Umwelt nicht belastet wird. Ein wesentlicher Punkt dabei ist, daß zu jeder Betriebssituation eine ausreichende Kühlung von wichtigen Komponenten der Kernkraftanlage gewährleistet ist. Zur Erhöhung der Sicherheit sind die zur Kühlung vorgesehenen Notkühleinrichtungen in der Regel als passive Bauelemente ausgestaltet, die unabhängig von externen Energiequellen und allein aufgrund von physikalischen Gesetzmäßigkeiten funktionsfähig sind.

Aus dem Artikel "SWR 1000 - Der Siedewasserreaktor der Zukunft", Siemens Power Journal, Seiten 18 bis 22, Februar 1996, Siemens AG, Deutschland, Best.Nr. A96001-U90-A314, ist ein innovatives Bau- und Sicherheitskonzept für einen Siedewasserreaktor bekannt. Bei dem darin beschriebenen Siedewasserreaktor ist der Reaktordruckbehälter zentral in einem Sicherheitsbehälter, dem Containment, angeordnet. Zur Notkühlung des Siedewasserreaktors sind im Innenraum des Sicherheitsbehälters eine abgeschlossene Kondensationskammer und ein darüber angeordnetes Flutbecken vorgesehen. Dieses ist zu einem zentralen Bereich hin offen, in welchem der Reaktordruckbehälter angeordnet ist. Das Flutbecken bildet mit dem zentralen Bereich eine Druckkammer. Oberhalb des Flutbeckens, d.h. im oberen Bereich der Druckkammer bzw. des Sicherheitsbehälters ist ein sogenannter Gebäudekondensator angeordnet. Der Gebäudekondensator steht mit einer Kühlflüssigkeit eines oberhalb des Sicherheitsbehälters angeordneten Kühlbeckens in Verbindung und dient zur Abfuhr der Wärme aus der Druckkammer.

Der Wirkungsgrad des Gebäudekondensators reagiert empfindlich auf die Anwesenheit von nichtkondensierbaren Gasen, wie Stickstoff oder Wasserstoff, wobei letzterer besonders bei schwerwiegenden Störfällen entstehen kann. Die nichtkondensierbaren Gase verringern nämlich die Fähigkeit des Gebäudekondensators, Wärme von in der Druckkammer eventuell vorhandenem Dampf in das Kühlbecken abzuführen. Wasserstoff reichert sich aufgrund seines geringen spezifischen Gewichts im oberen Bereich der Druckkammer an, so daß gerade in der Umgebung des Gebäudekondensators eine hohe Konzentration von nichtkondensierbaren Gasen vorliegen kann. Wegen der in diesem Fall mangelhaften Wärmeabfuhr über den Gebäudekondensator führt die hohe Konzentration zu einer Druckerhöhung im Sicherheitsbehälter.

Zur Wärmeabfuhr aus der Druckkammer bei einem Störfall sind Konzepte bekannt, bei denen die Druckkammer über einen Strömungsweg mit einem Kondensator verbunden ist, der in einem Kühlbecken angeordnet ist, welches sich beispielsweise auf dem Sicherheitsbehälter befindet. Über diesen Strömungsweg gelangt der bei einem Störfall in der Druckkammer befindliche heiße Dampf zusammen mit den nichtkondensierbaren Gasen in den Kondensator. Dort wird der Dampf durch Wärmeabgabe an das Kühlbecken abgekühlt und auskondensiert. In dem Kondensator bildet sich also ein Gemisch aus Flüssigkeit und nichtkondensierbaren Gasen. Damit keine Radioaktivität in die Umwelt gelangen kann, wird das Gemisch wieder in den Sicherheitsbehälter eingebracht. Es ist in der Regel eine Gas-Flüssigkeits-Trennvorrichtung vorgesehen, um die nichtkondensierbaren Gase abzutrennen. Diese werden in die Kondensationskammer geleitet und dort eingeschlossen, damit sie nicht wieder in die Druckkammer austreten können. Die Flüssigkeit wird wahlweise zur Kühlung des Reaktordruckbehälters herangezogen oder ebenfalls in die Kondensationskammer geleitet. Hierzu werden oftmals Steuerventile in entsprechenden Rohrleitungen eingesetzt. Dieses Konzept oder vergleichbare Konzepte zur Wärmeabfuhr bei einem Störfall sind beispielsweise beschrieben in der US-PS 5,102,617, der US-PS 5,149,492, der US-PS 5,570,401, der EP 0 681 300 A1 und der EP 0 620 560 A1. Allen bekannten Konzepten ist gemeinsam, daß der abzukühlende Dampf zusammen mit den nichtkondensierbaren Gasen in den Kondensator geleitet wird.

Aus der EP 0 492 899 A1 ist es bekannt, zwischen der Kondensationskammer und der Druckkammer einen Strömungsweg vorzusehen. Ab einem bestimmten Druckunterschied zwischen diesen beiden Kammern wird der Strömungsweg automatisch geöffnet, um bei einem Störfall zur Wärmeabfuhr und zum Druckabbau heißen Dampf in die Kondensationskammer einzuleiten. Der Strömungsweg ist als ein U-förmiges Rohr ausgebildet, das als Kondensationsrohr bezeichnet werden kann. Die beiden Schenkel des U-förmigen Rohrs sind mit ihren jeweiligen Öffnungen innerhalb der Druckkammer bzw. innerhalb der Kondensationskammer angeordnet. In der U-förmigen oder siphonartigen Biegung befindet sich Flüssigkeit, so daß der durch das U-förmige Rohr gebildete Strömungsweg verschlossen ist, solange der Druck in der Druckkammer nicht wesentlich über dem in der Kondensationskammer liegt.

Der vorliegenden Erfindung liegt die Aufgabe zugrunde, einen Sicherheitsbehälter einer Kernkraftanlage mit einem Kondensator und ein Verfahren zum Betrieb eines Kondensators anzugeben, wobei der Wirkungsgrad des Kondensators von nichtkondensierbaren Gasen weitgehend nicht beeinträchtigt wird.

Die auf den Sicherheitsbehälter gerichtete Aufgabe wird gemäß einer ersten Ausführung erfindungsgemäß dadurch gelöst, daß der Sicherheitsbehälter eine Kondensationskammer, eine Druckkammer sowie einen außerhalb der Druckkammer angeordneten Kondensator umfaßt, der mit der Druckkammer in Verbindung steht, wobei ein innerhalb des Sicherheitsbehälters angeordnetes Ableitrohr vorgesehen ist, das den oberen Bereich der Druckkammer mit der Kondensationskammer strömungstechnisch verbindet.

Gemäß einer zweiten Ausführung wird die auf den Sicherheitsbehälter gerichtete Aufgabe erfindungsgemäß dadurch gelöst, daß im Innenraum des Sicherheitsbehälters ein Kondensator sowie ein Ableitrohr vorgesehen ist, das den Bereich um den Kondensator mit der Kondensationskammer strömungstechnisch verbindet, wobei das obere Ende des Ableitrohrs oberhalb vom Kondensator angeordnet ist.

Den beiden Ausführungsformen liegt die gemeinsam erfinderische Idee zugrunde, einen hohen Wirkungsgrad des Kondensators zu gewährleisten, indem verhindert wird, daß nichtkondensierbare Gase in zu hoher Konzentration mit dem Kondensator in Kontakt kommen. Prinzipiell kann der Kondensator sowohl innerhalb als auch außerhalb der Druckkammer angeordnet sein. Ist er außerhalb der Druckkammer angeordnet, so wird ihm heißer Dampf aus dem oberen Bereich der Druckkammer über einen Strömungsweg zugeleitet. Gemäß der ersten Ausführungsform werden die nichtkondensierbaren Gase zuvor über das Ableitrohr aus dem oberen Bereich der Druckkammer in die Kondensationskammer abgeleitet. Bei einem innerhalb der Druckkammer angeordneten Kondensator ist gemäß der zweiten Ausführungsform vorgesehen, daß die nichtkondensierbaren Gase unmittelbar aus der Umgebung des Kondensators mit Hilfe des Ableitrohrs abgezogen werden. Der Kondensator ist dabei insbesondere im oberen Bereich der Druckkammer angeordnet.

Beide Ausführungsformen ist gemeinsam, daß das Ableitrohr als einfaches Rohr ausgestaltet und vollständig innerhalb des Sicherheitsbehälters angeordnet ist. Mit dem Ableitrohr wird eine unmittelbare und direkte Verbindung zwischen der Druckkammer und der Kondensationskammer geschaffen. In den durch das Ableitrohr gebildeten Strömungsweg sind insbesondere keine weiteren Komponenten geschaltet.

Durch die Anordnung des Ableitrohrs werden also in beiden Ausführungen die nichtkondensierbaren Gase gezielt und auf direktem Wege in die Kondensationskammer abgeleitet. Die Kondensationskammer ist bis zu einer Füllstandshöhe mit einer Kühlflüssigkeit angefüllt, die die sogenannte Wasservorlage bildet.

Die nichtkondensierbaren Gase sind beispielsweise Wasserstoff oder Inertgase, wie Luft oder Stickstoff. Luft oder Stickstoff vermischen sich im Bereich des Kondensators vergleichsweise gut mit dem Dampf. Die Fähigkeit des Kondensators zur Wärmeabfuhr kann dadurch wesentlich beeinträchtigt werden. Aufgrund der dann geringeren Wärmeabfuhr erhöht sich der Druck in der Druckkammer, und zwar so lange, bis das Dampf/Inertgas-Gemisch über das Ableitrohr selbsttätig in die Kondensationskammer überströmt. Dort kondensiert der Dampf in der Wasservorlage und die nichtkondensierbaren Gase bleiben im Gasraum der Kondensationskammer zurück. Das Dampf/Inertgas-Gemisch strömt so lange in die Kondensationskammer, bis die Konzentration der nichtkondensierbaren Gase sich so weit verringert hat, daß der Kondensator alle zugeführte Wärme wieder abführen kann.

Ist Wasserstoff vorhanden, so sammelt sich dieser wegen seines geringen spezifischen Gewichts im oberen Bereich der Druckkammer an. Bei Vorhandensein einer großen Menge von Wasserstoff ist der Kondensator von Wasserstoff umgeben. Der Wirkungsgrad des Kondensators ist dann wesentlich beeinträchtigt und die Wärmeabfuhr durch den Kondensator ist gering. In der Folge kommt es vergleichbar zur Anwesenheit von Inertgasen zur Druckerhöhung in der Druckkammer und zum Überströmen von nahezu reinem Wasserstoff in die Kondensationskammer. Auf diese Weise wird ein großer Teil des Wasserstoffs in die Kondensationskammer geleitet. Der Kondensator ist nach dem Abströmen von Wasserstoff wieder überwiegend von Dampf umgeben und kann die Wärme des Dampfes gut abführen. Insbesondere aufgrund der Anordnung des oberen Endes des Ableitrohrs oberhalb des Kondensators wird der Wasserstoff, der sich wegen seines geringen spezifischen Gewichts im obersten Bereich der Druckkammer oberhalb des Kondensators ansammelt, gezielt abgeleitet.

Die nichtkondensierbaren Gase verbleiben in der Kondensationskammer, die gegenüber der Druckkammer weitgehend abgeschlossen ist, und können nicht in die Druckkammer entweichen. Die Konzentration von nichtkondensierbaren Gasen im Bereich des Kondensators bleibt daher gering. Es ist also gewährleistet, daß die Wirkungsweise des Kondensators weitgehend unbeeinträchtigt von den nichtkondensierbaren Gasen ist.

Ein wesentlicher Vorteil der Anordnung des Ableitrohrs besteht darin, daß der Kondensator konstruktiv einfach ausgelegt werden kann. Insbesondere ist es ausreichend, seine Wärmtauschkapazität für nahezu reinen Sattdampf auszulegen. Die wärmetauschende Oberfläche des Kondensators kann deshalb einfacher und kleiner ausgestaltet werden als bei Abwesenheit des Ableitrohrs. In der Regel sind die wärmetauschenden Flächen Rohre, die zu kompakten Wärmetauscher-Bündeln gepackt werden.

Ein weiterer Vorteil ist, daß der gesamte Gasraum der Kondensationskammer für die Speicherung des beispielsweise bei einem Störfall freigesetzten Wasserstoffs zur Verfügung steht. Bei einem Störfall ist der Druckanstieg im Sicherheitsbehälter daher geringer, als bei Fehlen der Überströmmöglichkeit für den Wasserstoff über das Ableitrohr.

Um eine konstruktiv besonders einfache Ausgestaltung des Abströmrohrs sowie einen wartungsfreien und sicheren Betrieb des Abströmrohrs zu ermöglichen, bildet dieses vorzugsweise einen permanent offenen Strömungsweg. Es sind also keine Ventile, Schieber oder ähnliche Absperrmechanismen in dem Ableitrohr vorgesehen.

In einer vorteilhaften Ausgestaltung taucht das untere Ende des Ableitrohrs in die Kühlflüssigkeit der Kondensationskammer ein. Dadurch kondensiert Dampf, der mit den nichtkondensierbaren Gasen über das Ableitrohr in die Kondensationskammer geleitet wird, unmittelbar mit dem Einleiten in die Kondensationskammer.

In einer weiteren bevorzugten Ausführungsform mündet das untere Ende des Ableitrohrs unterhalb eines Kondensationsrohrs, das beispielsweise von der Druckkammer in die Kondensationskammer führt, in die Kühlflüssigkeit. Solche Kondensationsrohre sind vorgesehen, um große Dampfmengen aus der Druckkammer in die Kondensationskammer zu leiten und dort zu kondensieren, so daß der Druck in der Druckkammer und damit im Sicherheitsbehälter reduziert wird. Das Kondensationsrohr ist demnach in die Kühlflüssigkeit der Kondensationskammer tiefer eingetaucht als das Ableitrohr, und im Ableitrohr ist eine geringere Wassersäule vorhanden als im Kondensationsrohr. Die geringere Eintauchtiefe des Ableitrohrs bewirkt, daß bei kleinen Störfällen mit geringem Dampfaustritt lediglich über das Ableitrohr Dampf in die Kondensationskammer überführt wird, während die wesentlich größeren Kondensationsrohre durch Wasserpfropfen verschlossen bleiben.

Vorteilhafterweise steht der Kondensator mit einem externen Kühlbecken strömungstechnisch in Verbindung. Ein solcher Kondensator wird auch als Gebäudekondensator bezeichnet. Durch ihn kann die Wärme aus dem Sicherheitsbehälter in die Umgebung des Sicherheitsbehälters abgegeben werden. Das Kühlbekken ist dabei insbesondere außerhalb des Sicherheitsbehälters auf diesem angeordnet.

Die auf ein Verfahren zum Betrieb eines Kondensators in einer Kernkraftanlage gerichtete Aufgabe wird erfindungsgemäß dadurch gelöst, daß nichtkondensierbare Gase aus dem Bereich oberhalb des Kondensators selbsttätig abgeführt werden, so daß sein Wirkungsgrad von nichtkondensierbaren Gasen weitgehend unbeeinflußt ist.

Weitere vorteilhafte Ausgestaltungen des Verfahrens sind den Unteransprüchen zu entnehmen. Für das Verfahren gelten sinngemäß die gleichen Vorteile wie für den Sicherheitsbehälter.

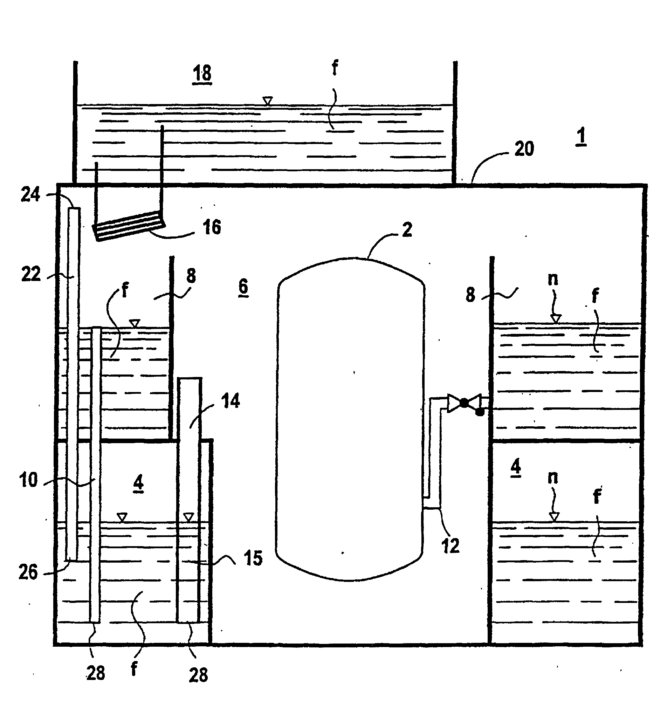

Ein Ausführungsbeispiel der Erfindung wird im folgenden anhand der Zeichnung näher erläutert. Die einzige Figur zeigt einen grob vereinfachten und schematischen Schnitt durch einen Sicherheitsbehälter einer Siederwasserreaktor-Kernkraftanlage mit darüber angeordnetem Kühlbecken.

Gemäß der Figur ist zentral in einem geschlossenen Sicherheitsbehälter 1, der auch als Containment bezeichnet wird, ein Reaktordruckbehälter 2 angeordnet. Seitlich neben dem Reaktordruckbehälter 2 sind in dem Sicherheitsbehälter 1 als weitere Einbauten eine Kondensationskammer 4 und ein darüber angeordnetes Flutbecken 8 vorgesehen. Das Flutbecken 8 ist zum Innenraum des Sicherheitsbehälters 1 nach oben hin offen. Der Innenraum wird auch als Druckkammer 6 bezeichnet. Diese bildet mit dem Flutbecken 8 einen gemeinsamen Druckraum.

Kondensationskammer 4 und Flutbecken 8 sind jeweils teilweise mit einer Kühlflüssigkeit f, insbesondere Wasser, bis zu einem Füllstandsniveau n gefüllt. Das maximale Füllstandsniveau n in dem Flutbecken 8 ist durch das obere Ende eines Überlaufrohrs 10 bestimmt. Das Überlaufrohr 10 verbindet das Flutbecken 8 mit der Kondensationskammer 4 und mündet in die Kühlflüssigkeit f der Kondensationskammer 4. Sofern das maximale Füllstandsniveau n überschritten wird, strömt Kühlflüssigkeit f vom Flutbecken 8 in die Kondensationskammer 4 ab. Das Flutbecken 8 ist weiterhin über eine Flutleitung 12 mit dem Reaktordruckbehälter 2 verbunden und kann diesen im Notfall mit ausreichend Kühlflüssigkeit f versorgen.

Die Kondensationskammer 4 ist gegenüber der Druckkammer 6 weitgehend abgeschlossen. Sie steht lediglich über ein Kondensationsrohr 14 mit der Druckkammer 6 in Verbindung. Das Kondensationsrohr 14 taucht in die Kühlflüssigkeit f der Kondensationskammer 4 ein, so daß zwischen Kondensationskammer 4 und Druckkammer 6 kein Gasaustausch stattfindet. Das Kondensationsrohr 14 ist durch einen Wasserpfropfen 15, der von einer Wassersäule im Kondensationsrohr 14 gebildet ist, verschlossen. Lediglich bei einem Störfall, wenn der Druck in der Druckkammer 6 ansteigt, strömt über das Kondensationsrohr 14 Dampf zum Kondensieren in die Kondensationskammer 4. In der linken Bildhälfte ist im oberen Bereich des Sicherheitsbehälters 1 und damit im oberen Bereich der Druckkammer 6 ein Kondensator 16 angeordnet, der als Gebäudekondensator bezeichnet wird. Der Kondensator 16 ist als Wärmetauscher mit Wärmetauscherrohren ausgestaltet und steht mit einem Kühlbecken 18 strömungstechnisch in Verbindung. Der Kondensator 16 kann prinzipiell auch außerhalb des Sicherheitsbehälters 1 in diesem Kühlbecken 18 angeordnet sein und über Rohrleitungen mit dem Innenraum des Sicherheitsbehälters, insbesondere mit der Druckkammer 6, verbunden sein. Das Kühlbekken 18 ist außerhalb des Sicherheitsbehälters 1 auf dessen Deckel 20 angeordnet. Der Kondensator 16 nimmt die Wärme aus seiner Umgebung innerhalb des Sicherheitsbehälters 1 auf und leitet sie an das Kühlbecken 18 weiter. Dadurch kann Wärme aus dem Sicherheitsbehälter 1 in die äußere Umgebung abgegeben werden.

Bevorzugt im Bereich des Kondensators 16 ist ein Ableitrohr 22 angeordnet. Wesentlich ist, daß sein oberes Ende 24 im oberen Bereich der Druckkammer 6 und insbesondere auf einem Niveau oberhalb des Kondensators 16 angeordnet ist. Sein unteres Ende 26 mündet in die Kühlflüssigkeit f der Kondensationskammer 4. Das Ableitrohr 22 ist als einfaches und einbautenfreies Rohr ausgestaltet, das einen offenen Strömungsweg von der Druckkammer 6 in die Kühlflüssigkeit f der Kondensationskammer 4 bildet. Einbautenfrei bedeutet hierbei, daß keine Ventile oder sonstigen Armaturen oder Komponenten in den Strömungsweg geschaltet sind.

Die Eintauchtiefe des Ableitrohrs 22 in der Kühlflüssigkeit f ist dabei kleiner als die des Überlaufrohrs 10 und die des Kondensationsrohrs 14, welches eine wesentlich größere Querschnittsfläche als das Ableitrohr 22 aufweist. Das untere Ende 26 des Ableitrohrs 22 ist daher oberhalb der jeweiligen Austrittsmündungen 28 des Kondensationsrohrs 14 bzw. des Überlaufrohrs 10 angeordnet.

Bei einem Störfall, beispielsweise beim Bruch einer Dampfleitung im Sicherheitsbehälter 1 und dem damit verbundenen Dampfaustritt, steigt die Temperatur und der Druck im Sicherheitsbehälter 1 an. Über verschiedene Notkühleinrichtungen, von denen in der Figur lediglich der Kondensator 16 und das Flutbecken 8 mit zugehöriger Flutleitung 12 gezeigt sind, wird gewährleistet, daß der Störfall-Enddruck im Sicherheitsbehälter 1 einen zulässigen Grenzwert nicht überschreitet. Dies wird in erster Linie durch Kühlen und Auskondensieren des Dampfes erzielt. Eine wichtige Rolle hierbei spielt der Kondensator 16, mit dem Wärme aus dem Sicherheitsbehälter 1 nach außen abgeführt werden kann.

Im Verlauf eines Störfalls werden unter Umständen nichtkondensierbare Gase, insbesondere Wasserstoff, freigesetzt, die sich im oberen Bereich des Sicherheitsbehälters 1, d.h. im oberen Bereich der Druckkammer 6, anreichern. Die nichtkondensierbaren Gase sammeln sich im oberen Bereich der Druckkammer 6 an und führen zu einer Erhöhung des Drucks im Sicherheitsbehälter 1. Aufgrund der Anordnung des Ableitrohrs 22 und des erhöhten Drucks im Bereich des oberen Endes 24 strömt das dort bestehende Gemisch aus Dampf und nichtkondensierbaren Gasen über das Ableitrohr 22 aus dem oberen Bereich der Druckkammer 6 in die Kondensationskammer 4 ab. Der mitgeführte Dampf wird in der Kondensationskammer 4 auskondensiert. Durch das Ableitrohr 22 wird daher im Bereich um den Kondensator 16 eine Ansammlung von nichtkondensierbaren Gasen vermieden, für die der gesamte Gasraum in der Kondensationskammer 4 zur Verfügung steht.

Prinzipiell beeinträchtigen die nichtkondensierbaren Gase den Wirkungsgrad des Kondensators 16, indem sie die Wärmetauschfähigkeit des Kondensators 16 wesentlich verringern. Bei Anwesenheit von nichtkondensierbaren Gasen kann der Wärmetauscher 16 wesentlich weniger Wärme pro Zeit- und Flächeneinheit aus dem Dampf an das Kühlbecken 18 abführen als bei Abwesenheit der nichtkondensierbaren Gase. Da diese aus der Umgebung des Kondensators 16 abgeleitet werden, kann der Kondensator 16 für Sattdampf ausgelegt werden. Er braucht also keine großen und speziell gestalteten Wärmetauschflächen aufzuweisen, die im Falle der Anwesenheit von nichtkondensierbaren Gasen zwingend erforderlich wären, um ausreichend Wärme abführen zu können. Der Kondensator 16 kann daher einfach, kompakt und damit kostengünstig ausgestaltet werden.

Aufgrund der geringeren Eintauchtiefe des Ableitrohrs 22 im Vergleich zu der des Kondensationsrohrs 14 wird ausschließlich über das Ableitrohr 22 Dampf aus der Druckkammer 6 in die Kondensationskammer 4 einströmen, solange in der Druckkammer 6 nur ein geringer Überdruck gegenüber dem Druck in der Kondensationskammer 4 besteht. Erst bei größeren Druckunterschieden zwischen Druckkammer 6 und Kondensationskammer 4, die nur in Ausnahmefällen kurzfristig auftreten, kann Dampf über das Kondensationsrohr 14 in die Kondensationskammer 4 einströmen. Das Kondensationsrohr 14 weist einen großen Strömungsquerschnitt auf und ermöglicht daher, sehr große Dampfmengen in kürzester Zeit zum Kondensieren in die Kondensationskammer 4 zu leiten.

Gemäß der vorliegenden neuen Idee werden in einem Sicherheitsbehälter 1 mit einem Kondensator 16 nichtkondensierbare Gase aus dem Wirkbereich des Kondensators 16 über einen Strömungsweg automatisch in die Kondensationskammer 4 abgeleitet. Der Strömungsweg wird dabei von einem einfachen Ableitrohr 22 gebildet. Die Wirkungsweise des Ableitrohrs 22 ist rein passiv, es sind also keine externen Steuereingriffe nötig. Das Ableitrohr 22 benötigt auch keine beweglichen Komponenten und ist daher wartungsfrei. Durch die Anordnung des Ableitrohrs 22 wird die Funktionsfähigkeit des Kondensators 16 gewährleistet, so daß dieser konstruktiv einfach ausgelegt werden kann.

## Patentansprüche

1. Sicherheitsbehälter (1) einer Kernkraftanlage mit einem Innenraum (4, 6, 8), der eine Kondensationskammer (4) und eine Druckkammer (6) aufweist, und mit einem außerhalb der Druckkammer (6) angeordneten Kondensator (16), der mit der Druckkammer (6) über einen Strömungsweg in Verbindung steht, sowie mit einem Ableitrohr (22) für nichtkondensierbare Gase, **dadurch gekennzeichnet, daß** das Ableitrohr (22) innerhalb des Innenraums (4, 6, 8) angeordnet ist und den oberen Bereich der Druckkammer (6) mit der Kondensationskammer (4) strömungstechnisch verbindet.

2. Sicherheitsbehälter (1) einer Kernkraftanlage, mit einem Innenraum (4, 6, 8), der eine Kondensationskammer (4), eine Druckkammer (6) und einen in der Druckkammer (6) angeordneten Kondensator (16) aufweist, sowie mit einem Ableitrohr (22) für nichtkondensierbare Gase,
**dadurch gekennzeichnet, daß** das Ableitrohr (22) den Bereich um den Kondensator (16) mit der Kondensationskammer (4) strömungstechnisch verbindet, wobei das obere Ende (24) des Ableitrohrs (22) oberhalb vom Kondensator (16) angeordnet ist.

3. Sicherheitsbehälter (1) nach Anspruch 1 oder 2,
**dadurch gekennzeichnet, dass** das Ableitrohr (22) einen permanent offenen Strömungsweg bildet.

4. Sicherheitsbehälter nach einem der Ansprüche 1 bis 3,
**dadurch gekennzeichnet, daß** die Kondensationskammer (4) eine Kühlflüssigkeit (f) enthält, in die ein unteres Ende (26) des Ableitrohrs (22) eintaucht.

5. Sicherheitsbehälter nach einem der Ansprüche 1 bis 4,
**dadurch gekennzeichnet, daß** ein Kondensationsrohr (14) vorgesehen ist, das in die Kondensationskammer (4) führt, wobei das Kondensationsrohr (14) unterhalb des unteren Endes (26) des Ableitrohrs (22) endet.

6. Sicherheitsbehälter nach einem der Ansprüche 1 bis 5, bei dem der Kondensator (16) mit einem externen Kühlbecken (18) strömungstechnisch in Verbindung steht.

7. Verfahren zum Betrieb eines Kondensators (16) in einer Kernkraftanlage,
**dadurch gekennzeichnet, daß** nichtkondensierbare Gase selbsttätig aus dem Bereich oberhalb des Kondensators (16) abgeführt werden.

8. Verfahren nach Anspruch 7,
**dadurch gekennzeichnet, daß** die nicht kondensierbaren Gase in eine Kondensationskammer (4) geleitet werden, insbesondere in eine in der Kondensationskammer (4) befindliche Kühlflüssigkeit (f).

9. Verfahren nach Anspruch 7 oder 8,
**dadurch gekennzeichnet, dass** die nichtkondensierbaren Gase oberhalb einer Austrittsmündung (28) eines Kondensationsrohrs (14) in eine in der Kondensationskammer (4) befindliche Kühlflüssigkeit (f) geleitet werden.

## Claims

1. Containment vessel (1) of a nuclear power plant having an interior space (4, 6, 8) which has a condensing chamber (4) and a pressure chamber (6), and having a condenser (16) which is arranged outside the pressure chamber (6) and communicates with the pressure chamber (6) by way of a flow path, and also having a drain pipe (22) for non-condensable gases, **characterised in that** the drain pipe (22) is arranged inside the interior space (4, 6, 8) and by fluid mechanics connects the upper region of the pressure chamber (6) with the condensing chamber (4).

2. Containment vessel (1) of a nuclear power plant, having an interior space (4, 6, 8) which has a condensing chamber (4), a pressure chamber (6) and a condenser (16) that is arranged in the pressure chamber (6), and also having a drain pipe (22) for non-condensable gases, **characterised in that** by fluid mechanics the drain pipe (22) connects the region around the condenser (16) with the condensing chamber (4), with the upper end (24) of the drain pipe (22) being arranged above the condenser (16).

3. Containment vessel (1) according to claim 1 or 2, **characterised in that** the drain pipe (22) forms a permanently open flow path.

4. Containment vessel according to one of claims 1 to 3, **characterised in that** the condensing chamber (4) contains a cooling liquid (f) into which a lower end (26) of the drain pipe (22) dips.

5. Containment vessel according to one of claims 1 to 4, **characterised in that** a condensing pipe (14) is provided that leads into the condensing chamber (4), with the condensing pipe (14) ending below the lower end (26) of the drain pipe (22).

6. Containment vessel according to one of claims 1 to 5, wherein by fluid mechanics the condenser (16) communicates with an external cooling basin (18).

7. Method for operating a condenser (16) in a nuclear power plant, **characterised in that** non-condensable gases are automatically discharged out of the region above the condenser (16).

8. Method according to claim 7, **characterised in that** the non-condensable gases are directed into a condensing chamber (4), in particular into a cooling liquid (f) located in the condensing chamber (4).

9. Method according to claim 7 or 8, **characterised in that** the non-condensable gases are directed into a cooling liquid (f) located in the condensing chamber (4), above an outlet opening (28) of a condensing pipe (14).

## Revendications

1. Enceinte (1) de confinement d'une centrale nucléaire, ayant un espace (4, 6, 8) intérieur qui comprend une chambre (4) de condensation et une chambre (6) sous pression, et ayant un condensateur (16) disposé à l'extérieur de la chambre (6) sous pression et communiquant avec la chambre (6) sous pression par un trajet d'écoulement, ainsi qu'un conduit (22) d'évacuation de gaz non condensables, **caractérisée en ce que** le conduit (22) d'évacuation est disposé à l'intérieur de l'espace (4, 6, 8) intérieur et met la partie supérieure de la chambre (6) sous pression en communication, du point de vue de la technique des fluides, avec la chambre (4) de condensation.

2. Enceinte (1) de confinement d'une centrale nucléaire, ayant un espace (4, 6, 8) intérieur qui comprend une chambre (4) de condensation, une chambre (6) sous pression et un condensateur (16) disposé dans la chambre (6) sous pression, ainsi qu'un conduit (22) d'évacuation de gaz non condensables, **caractérisée en ce que** le conduit (22) d'évacuation met la partie autour du condensateur (16) en communication, du point de vue de la technique des fluides, avec la chambre (4) de condensation, l'extrémité (24) supérieure du conduit (22) d'évacuation étant disposée au-dessus du condensateur (16).

3. Enceinte (1) de confinement suivant la revendication 1 ou 2, **caractérisée en ce que** le conduit (22) d'évacuation forme un trajet d'écoulement ouvert de manière permanente.

4. Enceinte (1) de confinement suivant l'une des revendications 1 à 3, **caractérisée en ce que** la chambre (4) de condensation contient un liquide (f) de refroidissement, dans lequel plonge une extrémité (26) inférieure du conduit (22) d'évacuation.

5. Enceinte (1) de confinement suivant l'une des revendications 1 à 4, **caractérisée en ce qu'**il est prévu un conduit (14) de condensation qui mène à la chambre (4) de condensation, le conduit (14) de condensation se terminant en dessous de l'extrémité (26) inférieure du conduit (22) d'évacuation.

6. Enceinte (1) de confinement suivant l'une des revendications 1 à 5, dans laquelle le condensateur (16) communique du point de vue de la technique des fluides avec un bassin (18) extérieur de refroidissement.

7. Procédé pour faire fonctionner un condensateur (16) dans une centrale nucléaire,
**caractérisé en ce qu'**il consiste à évacuer des gaz non condensables automatiquement de la partie au-dessus du condensateur (16).

8. Procédé suivant la revendication 7, **caractérisé en ce qu'**il consiste à envoyer les gaz non condensables dans une chambre (4) de condensation, notamment dans un liquide (f) de refroidissement se trouvant dans la chambre (4) de condensation.

9. Procédé suivant la revendication 7 ou 8, **caractérisé en ce qu'**il consiste à envoyer les gaz non condensables au-dessus d'une embouchure (28) de sortie d'un conduit (14) de condensation, dans un liquide (f) de refroidissement se trouvant dans la chambre (4) de condensation.
